# EUROPEAN PATENT APPLICATION

(11) **EP 4 600 083 A1**
(43) Date of publication of application: **13.08.2025**
(21) Application number: 22963782.2
(22) Date of filing: 31.10.2022
(51) Int. Cl.: B60N 2/22, B60H 1/24

(54) **SEAT AND VEHICLE**

(71) Applicant: Shenzhen Yinwang Intelligent Technologies Co., Ltd., Shenzhen, Guangdong 518129 (CN)
(72) Inventor: XIA, Dongchao, Shenzhen, Guangdong 518129 (CN); SUN, Jian, Shenzhen, Guangdong 518129 (CN); SHI, Hao, Shenzhen, Guangdong 518129 (CN)
(74) Representative: Maiwald GmbH
(86) International application number: PCT/CN2022/128779
(87) International publication number: WO 2024/092463

(57) **Abstract**

A seat is disclosed, fixed in a cockpit of a transportation means. The seat includes a chair seat (a), a chair back (b), and an air duct (c), and the air duct includes an inlet (d) and a first outlet (e). The inlet of the air duct is disposed at the bottom of the chair seat, and is configured to connect to an air conditioning system (g) of the transportation means, and the first outlet of the air duct faces a rear part of the chair back. The seat provides a better cold-air or warm-air blowing effect for a passenger in the transportation means. A vehicle including the seat is further disclosed.

## Description

### TECHNICAL FIELD

Embodiments of this application relate to the field of mechanical and electronic technologies, and in particular, to a seat and a vehicle.

### BACKGROUND

In a conventional passenger vehicle, to meet a cooling requirement of a rear passenger, an air-conditioning air outlet is generally disposed at a rear side of an auxiliary dash board.

However, due to a limitation of a size of the auxiliary dash board, an effective blow surface area of the air-conditioning air outlet is limited, and an air diversion volume is also insufficient. In addition, when there are a plurality of rear passengers, the air-conditioning air outlet cannot cover all of the rear passengers. For example, if the air-conditioning air outlet directs air to a left side, passengers in the middle and on a right side cannot be covered.

### SUMMARY

A first aspect of this application provides a seat.

The seat is disposed in a transportation means, and includes a chair seat, a chair back, and an air duct. The air duct includes an inlet and a first outlet.

The inlet of the air duct is disposed at the bottom of the chair seat, and is configured to connect to an air conditioning system of the transportation means, and the first outlet of the air duct faces a rear part of the chair back.

In this application, an air conditioning airflow generated by the air conditioning system of the transportation means is transported to the inlet of the air duct, and then the air conditioning airflow is discharged from the rear part of the chair back through the first outlet of the air duct, so as to directly blow a passenger located behind the chair back. In addition, because an area of the rear part of the chair back is large, a sufficient air diversion volume can be ensured.

In a possible implementation, the seat further includes a head pillow, the air duct further includes a second outlet, and the second outlet is disposed at the head pillow.

In this application, an air conditioning airflow can be further discharged from the head pillow through the second outlet of the air duct, so as to blow a passenger on the seat.

In a possible implementation, the air duct further includes a third outlet, and the third outlet faces a front part of the chair back.

In this application, an air conditioning airflow can be further discharged from the front part of the chair back through the third outlet of the air duct, so as to blow a passenger on the seat.

In a possible implementation, the air duct further includes a third outlet, and the third outlet faces a front part of the chair back.

In this application, an air conditioning airflow can be further discharged from the head pillow and the front part of the chair back through the second outlet and the third outlet of the air duct, so as to blow a passenger on the seat.

In a possible implementation, the air duct further includes a first control valve disposed inside the chair back; the first control valve includes a first interface, a second interface, and a third interface; the inlet of the air duct is connected to the first interface, the second interface is connected to the first outlet, and the third interface is connected to the second outlet; and the first control valve is configured to connect the first interface to at least one of the second interface and the third interface under a preset condition. The preset condition may be a user instruction or vehicle control information. The at least one of the second interface and the third interface may be the second interface or the third interface, or may include the second interface and the third interface.

In a possible implementation, the air duct further includes a first control valve disposed inside the chair back; the first control valve includes a first interface, a second interface, and a third interface; the inlet of the air duct is connected to the first interface, the second interface is connected to the first outlet, and the third interface is connected to the third outlet; and the first control valve is configured to connect the first interface to at least one of the second interface and the third interface under a preset condition. The preset condition may be a user instruction or vehicle control information. The at least one of the second interface and the third interface may be the second interface or the third interface, or may include the second interface and the third interface.

In this application, the first control valve is disposed, so as to control an exhaust status of an air conditioning airflow from each outlet.

In a possible implementation, the air duct further includes a first control valve disposed inside the chair back; the first control valve includes a first interface, a second interface, and a third interface; the inlet of the air duct is connected to the first interface, the second interface is connected to the first outlet, and the third interface is connected to the second outlet and the third outlet; and the first control valve is configured to connect the first interface to at least one of the second interface and the third interface under a preset condition.

**In** this application, the first control valve is disposed, so as to control an exhaust status of an air conditioning airflow from each outlet.

**In** a possible implementation, the air duct further includes a second control valve; the second control valve includes a fourth interface, a fifth interface, and a sixth interface; the fourth interface is connected to the third interface, and the fifth interface and the sixth interface are respectively connected to the second outlet and the third outlet; and the second control valve is configured to connect the fourth interface to at least one of the fifth interface and the sixth interface under a preset condition. The preset condition may be a user instruction or vehicle control information. The at least one of the fifth interface and the sixth interface may be the fifth interface or the sixth interface, or may include the fifth interface and the sixth interface.

In this application, the first control valve is disposed, so as to control an exhaust status of an air conditioning airflow from each outlet.

In a possible implementation, a first flow-guiding apparatus is disposed inside the first control valve, and the first flow-guiding apparatus includes a plurality of first air baffles distributed in a fan blade manner. The first flow-guiding apparatus can rotate, and when the plurality of first air baffles are at a preset location, the first interface, the second interface, and the third interface are not blocked, or the first interface and the second interface are not blocked but the third interface is blocked, or the first interface and the third interface are not blocked but the second interface is blocked, or the first interface, the second interface, and the third interface are blocked.

In this application, an air conditioning airflow can be controlled by rotating the first flow-guiding apparatus, thereby reducing complexity of the solution.

In a possible implementation, a first flow-guiding apparatus is disposed inside the first control valve, and the first flow-guiding apparatus includes a plurality of first air baffles distributed in a fan blade manner. The first flow-guiding apparatus can rotate, and when the plurality of first air baffles are at a preset location, the first interface, the second interface, and the third interface are not blocked, or the first interface and the second interface are not blocked but the third interface is blocked, or the first interface and the third interface are not blocked but the second interface is blocked, or the first interface, the second interface, and the third interface are blocked.

In this application, an air conditioning airflow can be controlled by rotating the first flow-guiding apparatus, thereby reducing complexity of the solution.

In a possible implementation, a second flow-guiding apparatus is disposed inside the second control valve, and the second flow-guiding apparatus includes a plurality of second air baffles distributed in a fan blade manner. The second flow-guiding apparatus can rotate, and when the plurality of second air baffles are at a preset location, the fourth interface, the fifth interface, and the sixth interface are not blocked, or the fourth interface and the fifth interface are not blocked but the sixth interface is blocked, or the fourth interface and the sixth interface are not blocked but the fifth interface is blocked, or the fourth interface, the fifth interface, and the sixth interface are blocked.

In this application, an air conditioning airflow can be controlled by rotating the first flow-guiding apparatus, thereby reducing complexity of the solution.

In a possible implementation, the air duct includes a first corrugated pipe and a second corrugated pipe, one end of the first corrugated pipe is the inlet of the air duct, and the second corrugated pipe is disposed near a joint between the chair seat and the chair back.

In this application, because the first corrugated pipe and the second corrugated pipe are disposed, when the seat moves forward and backward or the chair back turns over relative to the chair seat, the air duct can also ensure normal transport of an air conditioning airflow.

In a possible implementation, two sides of the first corrugated pipe and the second corrugated pipe include reinforcing strips, and metal wires are disposed inside the reinforcing strips.

In this application, because the reinforcing strips with the built-in metal wires are disposed on the two sides, even if the first corrugated pipe and the second corrugated pipe are bent by a large rotation radius, a cross-sectional area is not affected, thereby further ensuring normal transport of an air conditioning airflow.

In a possible implementation, the air duct includes an air purifier.

In this application, an air conditioning airflow can be first purified by the air purifier and then enter the first interface, thereby ensuring a cleanness degree of the air conditioning airflow discharged from the seat.

In a possible implementation, the first outlet is connected to a grille air exhaust apparatus or an electric air exhaust apparatus disposed at the rear part of the chair back.

In a possible implementation, the second outlet is connected to a strip-shaped air exhaust apparatus or a ring-shaped air exhaust apparatus disposed at the head pillow.

In this application, because the strip-shaped air exhaust apparatus and the ring-shaped air exhaust apparatus are disposed, an air conditioning airflow has a good blowing effect, and an occupied area is reduced.

A second aspect of this application provides a vehicle, including the seat according to the first aspect.

A third aspect of this application provides a control valve.

The control valve includes a valve body and a flow-guiding apparatus disposed inside the valve body. The valve body is provided with a first interface, a second interface, and a third interface, and the flow-guiding apparatus includes a plurality of air baffles distributed in a fan blade manner. The flow-guiding apparatus can rotate, and when the plurality of air baffles are at a preset location, the first interface, the second interface, and the third interface are not blocked, or the first interface and the second interface are not blocked but the third interface is blocked, or the first interface and the third interface are not blocked but the second interface is blocked, or the first interface, the second interface, and the third interface are blocked.

A fourth aspect of this application provides a corrugated pipe.

The corrugated pipe includes a pipe body and reinforcing strips disposed on two sides of the pipe body. Metal wires are disposed inside the reinforcing strips.

### BRIEF DESCRIPTION OF DRAWINGS

FIG. 1 is a diagram of an air-conditioning air outlet in the conventional technology;
FIG. 2 is a diagram of a structure of a seat according to an embodiment of this application;
FIG. 3 is a diagram of another structure of a seat according to an embodiment of this application;
FIG. 4 is a diagram of a structure of a first control valve according to an embodiment of this application;
FIG. 5 is a diagram of another location of a first flow-guiding apparatus according to an embodiment of this application;
FIG. 6 is a diagram of another location of a first flow-guiding apparatus according to an embodiment of this application;
FIG. 7 is a diagram of another location of a first flow-guiding apparatus according to an embodiment of this application;
FIG. 8a is a diagram of a structure of a second control valve according to an embodiment of this application;
FIG. 8b is a diagram of a structure of a first air baffle according to an embodiment of this application;
FIG. 8c is a diagram of a structure of a second air baffle according to an embodiment of this application;
FIG. 9 is a diagram of a first air duct according to an embodiment of this application;
FIG. 10 is a diagram of a structure of a seventh air duct according to an embodiment of this application;
FIG. 11 is a diagram of a structure of a first corrugated pipe and a second corrugated pipe according to an embodiment of this application;
FIG. 12 is a diagram of a rotation radius according to an embodiment of this application;
FIG. 13 is a diagram of a grille air exhaust apparatus at a rear part of a chair back according to an embodiment of this application;
FIG. 14 is a diagram of a ring-shaped air exhaust apparatus at a head pillow according to an embodiment of this application; and
FIG. 15 is a diagram of discharging an air conditioning airflow by a ring-shaped air exhaust apparatus according to an embodiment of this application.

### DESCRIPTION OF EMBODIMENTS

The following describes embodiments of this application with reference to the accompanying drawings. It is clear that the described embodiments are merely some rather than all of embodiments of this application. A terminal of ordinary skill in the art may learn that with development of technologies and emergence of new scenarios, the technical solutions provided in embodiments of this application are also applicable to similar technical problems.

In this specification, the claims, and the accompanying drawings of this application, terms "first", "second", and the like are intended to distinguish between similar objects but do not necessarily indicate a specific order or sequence. It should be understood that data termed in such a way are interchangeable in proper circumstances, so that embodiments of the present invention described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

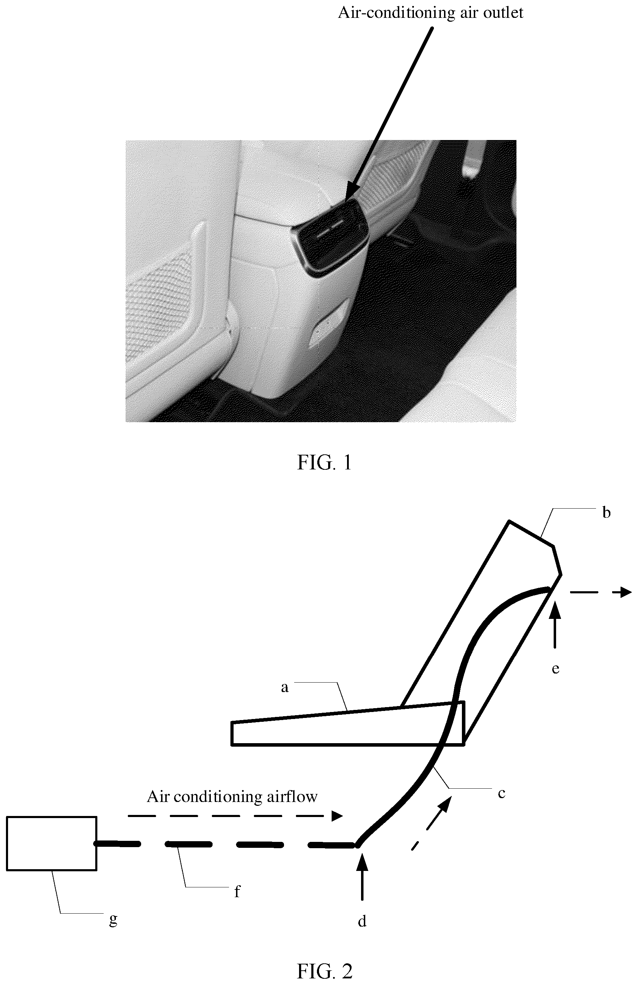

In a current passenger vehicle, an air conditioning system is generally configured to reduce a temperature in the vehicle, so as to provide comfortable passenger experience. The air conditioning system of the passenger vehicle includes an air conditioning box and a plurality of air-conditioning air outlets. The air conditioning box is configured to generate air-conditioning cold air. In this case, the air-conditioning air outlet is configured to discharge the air-conditioning cold air into the vehicle. As shown in FIG. 1, to meet a cooling requirement of a rear passenger, an air-conditioning air outlet is generally disposed at a rear side of an auxiliary dash board. However, because a size of the auxiliary dash board is small, an effective blow surface area and an air diversion volume of the air-conditioning air outlet are limited. In addition, because the auxiliary dash board is generally disposed in the middle of the vehicle, when there are a plurality of rear passengers, the air-conditioning air outlet cannot cover all of the passengers. For example, if the air-conditioning air outlet directs air to a left side, air-conditioning cold air cannot be blown to passengers in the middle and on a right side. In addition, for an automobile manufacturer, setting the air-conditioning air outlet on the rear side of the auxiliary dash board may cause limited storage space on the rear side of the auxiliary dash board, and may encounter various difficulties in specific structural arrangement.

Embodiments of this application provide a seat, to provide a better cold-air or warm-air blowing effect for a passenger in a transportation means.

The seat in embodiments of this application may be disposed in a cockpit of each transportation means. The transportation means may be, for example, a vehicle, an airplane, a train, or a ship. An air conditioning box configured to generate an air conditioning airflow is disposed in the transportation means. As shown in FIG. 2, the seat in embodiments of this application includes a chair seat (a), a chair back (b), and an air duct (c). The air duct (c) includes an inlet (d) and a first outlet (e). The inlet (d) is disposed at the bottom of the chair seat (a), and is configured to connect to an air-supply air duct (f) of the transportation means. The air-supply air duct (f) is further connected to an air conditioning system (g) of the transportation means, and is configured to transport an air conditioning airflow generated by the air conditioning system (g) to the inlet (d). The air conditioning airflow may be air-conditioning cold air or air-conditioning warm air. The first outlet (e) is close to and faces a rear part of the chair back (b), to discharge an air conditioning airflow from the rear part of the chair back (b). Based on the foregoing design, a passenger at a rear part of the seat can be directly blown by an air conditioning airflow, and an area of the rear part of the seat is large, so that a sufficient air diversion volume can be ensured.

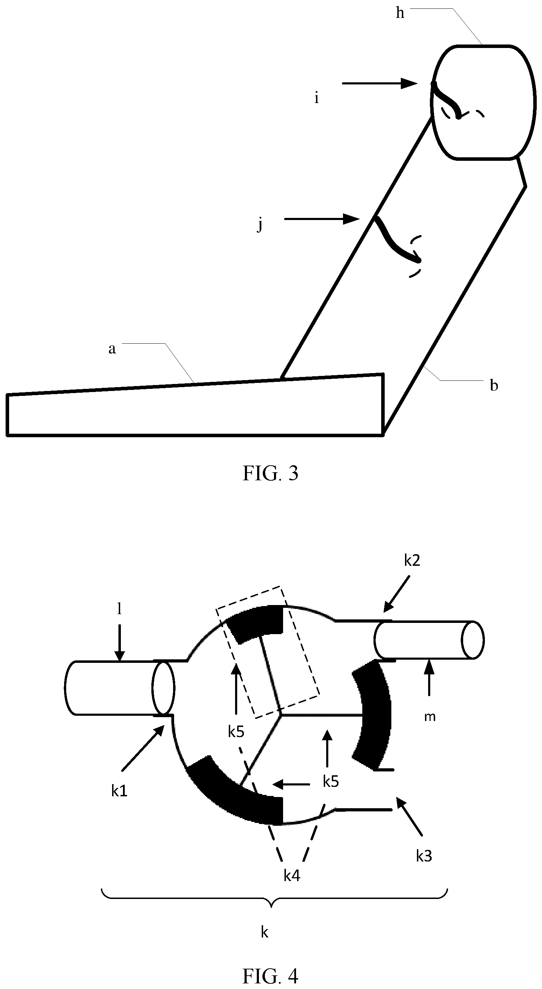

Based on the foregoing descriptions, as shown in FIG. 3, in a possible implementation, the seat further includes a head pillow (h), and the air duct (c) further includes a second outlet (i) and a third outlet (j). The second outlet (i) is disposed at the head pillow (h), to discharge an air conditioning airflow from the head pillow (h). The third outlet (j) is close to and faces a front part of the chair back (b), to discharge an air conditioning airflow from the front part of the chair back (b). It should be understood that two wave symbols shown in FIG. 3 indicate that only parts other than the second outlet (i) and the third outlet (j) of the air duct (c) are omitted.

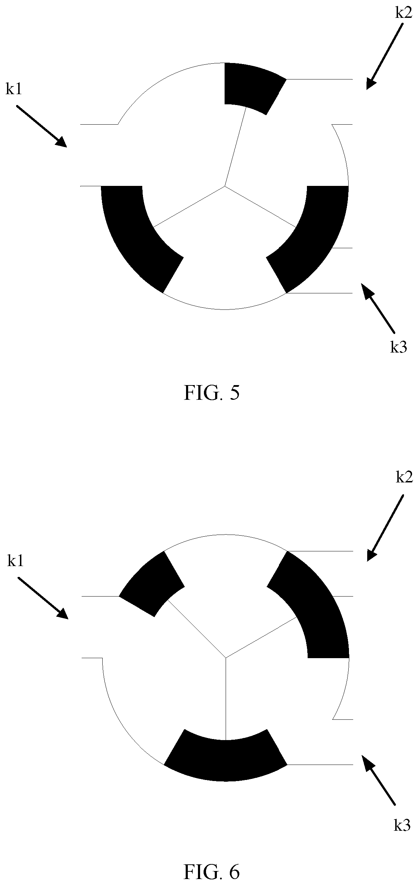

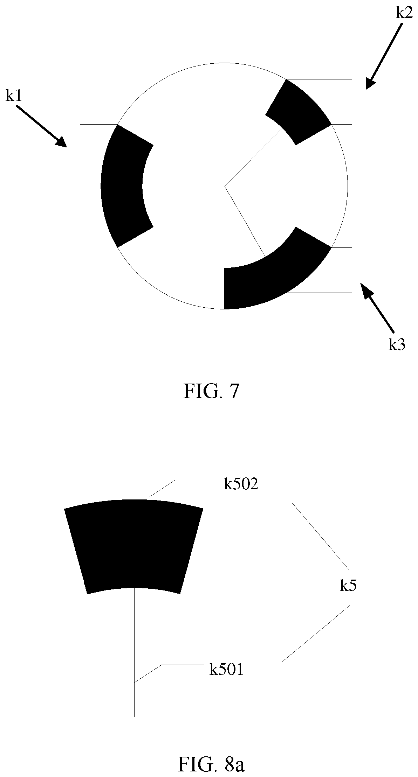

As shown in FIG. 4, in a possible implementation, the air duct (c) further includes a first control valve (k) disposed inside the chair back (b), a first air duct (l), and a second air duct (m). The first control valve (k) is provided with a first interface (k1), a second interface (k2), and a third interface (k3). A first flow-guiding apparatus (k4) is further disposed inside the first control valve (k), and the first flow-guiding apparatus (k4) includes a plurality of first air baffles (k5) distributed in a fan blade manner. One end of the first air duct (l) is the inlet (d), and the other end of the first air duct (l) is connected to the first interface (k1), so as to transport an air conditioning airflow to the first interface (k1). The second interface (k2) is connected to one end of the second air duct (m), the other end of the second air duct (m) is the first outlet (e), and the third interface (k3) is connected to the second outlet (i) and the third outlet (j). The first flow-guiding apparatus (k4) can rotate, and when the plurality of first air baffles (k5) are at a preset location, the first interface (k1), the second interface (k2), and the third interface (k3) are not blocked, or the first interface (k1) and the second interface (k2) are not blocked but the third interface (k3) is blocked, or the first interface (k1) and the third interface (k3) are not blocked but the second interface (k2) is blocked, or the first interface (k1), the second interface (k2), and the third interface (k3) are blocked. FIG. 4 is used as an example. The location of the plurality of first air baffles (k5) shown in FIG. 4 exactly does not block the first interface (k1), the second interface (k2), and the third interface (k3). Alternatively, as shown in FIG. 5, after the first flow-guiding apparatus (k4) rotates clockwise by 30 degrees on the basis of the location shown in FIG. 4, a location of the first flow-guiding apparatus (k4) is shown in FIG. 5. It is not difficult to learn that, in this case, the location of the plurality of first air baffles (k5) exactly does not block the first interface (k1) and the second interface (k2) but blocks the third interface (k3). Alternatively, as shown in FIG. 6, after the first flow-guiding apparatus (k4) rotates anticlockwise by 30 degrees on the basis of the location shown in FIG. 4, a location of the first flow-guiding apparatus (k4) is shown in FIG. 6. It is not difficult to learn that, in this case, the location of the plurality of first air baffles (k5) exactly does not block the first interface (k1) and the third interface (k3) but blocks the second interface (k2). Alternatively, as shown in FIG. 7, after the first flow-guiding apparatus (k4) rotates clockwise by 60 degrees on the basis of the location shown in FIG. 4, a location of the first flow-guiding apparatus (k4) is shown in FIG. 7. It is not difficult to learn that, in this case, the location of the plurality of first air baffles (k5) exactly blocks the first interface (k1), the second interface (k2), and the third interface (k3).

In a possible implementation, as shown in FIG. 8a, the first air baffle (k5) is formed by a connecting rod (k501) and an air baffle head (k502). The connecting rods (k501) of the plurality of first air baffles (k5) are connected to a same rotation axis, so that position switching is implemented under driving of the rotation axis. In addition, because the connecting rod (k501) is small in size, an air conditioning airflow is not blocked too much. The air baffle heads (k502) of the plurality of first air baffles (k5) are configured to block any quantity of air vents in the first interface (k1), the second interface (k2), and the third interface (k3). Certainly, FIG. 8a shows only one implementation of the first air baffle (k5). The first air baffle (k5) may alternatively be implemented in another form. For example, the connecting rod (k501) is replaced with another connection apparatus having a ventilation hole, or a shape of the air baffle head (k502) may be set differently from that shown in FIG. 8a. Details are not described herein again.

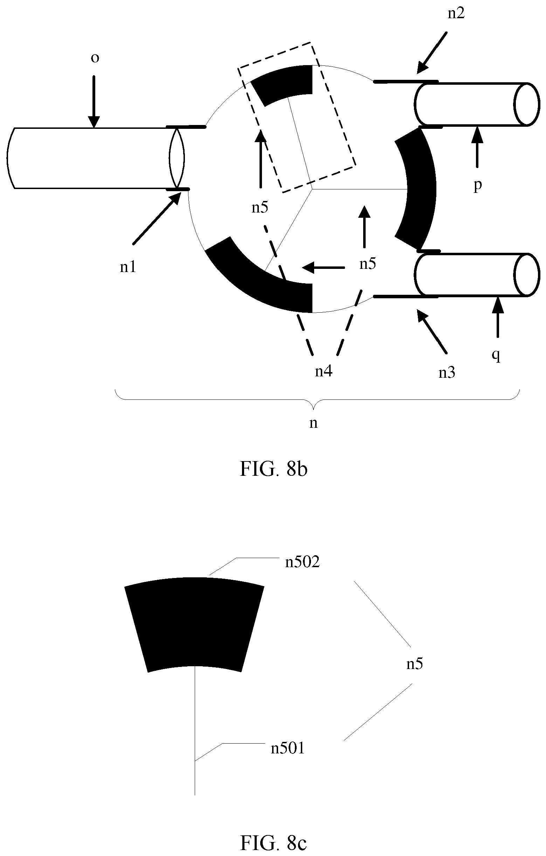

In addition, the air duct (c) further includes a second control valve (n) disposed inside the same chair back (b), a third air duct (o), a fourth air duct (p), and a fifth air duct (q). As shown in FIG. 8b, the second control valve (n) is provided with a fourth interface (n1), a fifth interface (n2), and a sixth interface (n3), a second flow-guiding apparatus (n4) is further disposed inside the second control valve (n), and the second flow-guiding apparatus (n4) includes a plurality of second air baffles (n5) distributed in a fan blade manner. Two ends of the third air duct (o) are respectively connected to the third interface (k3) and the fourth interface (n1), and an air conditioning airflow can enter the second control valve (n) through the third interface (k3), the third air duct (o), and the fourth interface (n1). The fifth interface (n2) is connected to one end of the fourth air duct (p), one end of the sixth interface (n3) is connected to one end of the fifth air duct (q), and the other end of the fourth air duct (p) and the other end of the fifth air duct (q) are respectively the second outlet (i) and the third outlet (j). The second flow-guiding apparatus (n4) can rotate, and when the plurality of second air baffles (n5) are at a preset location, the fourth interface (n1), the fifth interface (n2), and the sixth interface (n3) are not blocked, or the fourth interface (n1) and the fifth interface (n3) are not blocked but the sixth interface (n2) is blocked, or the fourth interface (n1) and the sixth interface (n3) are not blocked but the fifth interface (n2) is blocked, or the fourth interface (n1), the fifth interface (n2), and the sixth interface (n3) are blocked. A specific implementation principle is similar to the foregoing descriptions of the first control valve (k), and details are not described herein again.

In a possible implementation, as shown in FIG. 8c, the second air baffle (n5) is formed by a connecting rod (n501) and an air baffle head (n502). The connecting rods (n501) of the plurality of second air baffles (n5) are connected to a same rotation axis, so that position switching is implemented under driving of the rotation axis. In addition, because the connecting rod (n501) is small in size, an air conditioning airflow is not blocked too much. The air baffle heads (n502) of the plurality of second air baffles (n5) are configured to block any quantity of air vents in the fourth interface (n1), the third interface (n2), and the third interface (n3). Certainly, FIG. 8c shows only one implementation of the second air baffle (n5). The second air baffle (n5) may alternatively be implemented in another form. For example, the connecting rod (n501) is replaced with another connection apparatus having a ventilation hole, or a shape of the air baffle head (n502) may not be set based on the shape shown in FIG. 8c. Details are not described herein again.

The first control valve (k) and the second control valve (n) are disposed, so that after an air conditioning airflow is transported to the first interface (k1), whether the air conditioning airflow is discharged from the first outlet (e), the second outlet (i), and the third outlet (j) can be flexibly controlled.

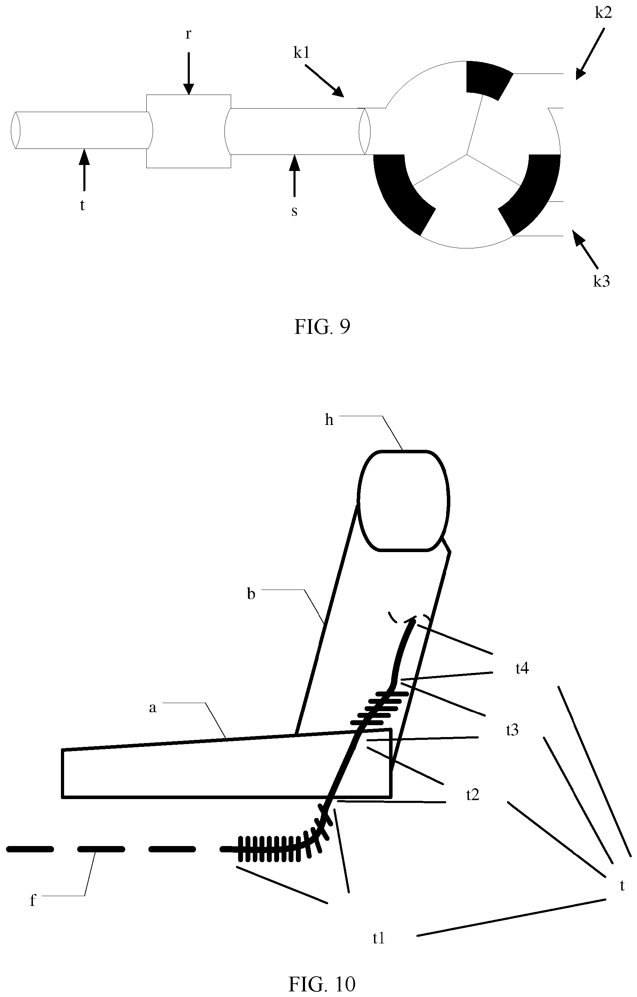

In a possible implementation, as shown in FIG. 9, the first air duct (l) may include an air purifier (r), a sixth air duct (s), and a seventh air duct (t). One end of the seventh air duct (t) is the inlet (d), and the other end of the seventh air duct (t) is connected to the air purifier (r). The air purifier (r) is further connected to one end of the sixth air duct (s), and the other end of the sixth air duct (s) is connected to the first interface (k1). The air purifier (s) is also referred to as an air cleaner, an air freshener, and a purifier, or the like, and may be a product that can absorb, decompose, or convert various air pollutants such as PM2.5, dust, pollen, odor, decoration pollutants such as formaldehyde, bacteria, and allergens to effectively improve air cleanliness. The air purifier (r) is mainly used in household, commercial, industrial, and building scenarios. The air purifier (s) may use various technologies, commonly, such as an adsorption technology, a negative (positive) ion technology, a catalytic technology, a photocatalytic technology, a superstructure photomineralization technology, an HEPA high-efficiency filtering technology, and an electrostatic dust collection technology. Materials or devices such as a photocatalytic, activated carbon, synthetic fibers, HEPA high-efficiency materials, and a negative ion generator are also involved. Based on the foregoing design, an air conditioning airflow first passes through the air purifier (s), and then is transported from the sixth air duct (s) to the first interface (k1), thereby ensuring cleanliness of the air conditioning airflow.

Further, as shown in FIG. 10, the seventh air duct (t) includes a first corrugated pipe (t1), a first blow-plastic air duct (t2), a second corrugated pipe (t3), and a second blow-plastic air duct (t4). The first corrugated pipe (t1) is disposed at the bottom of the chair seat (a), and one end of the first corrugated pipe (t1) is the inlet (d). The second corrugated pipe (t3) is disposed near a joint between the chair seat (a) and the chair back (b). The second blow-plastic air duct (t4) is connected to the air purifier (r).

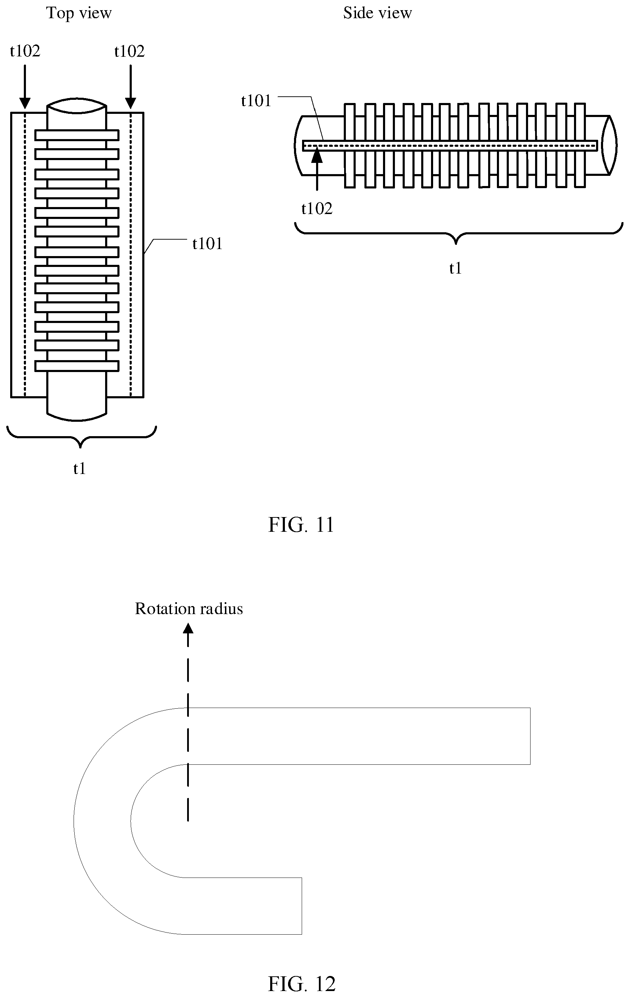

A corrugated pipe is a cylindrical thin-walled corrugated pipe with a plurality of transverse ripples. The corrugated pipe is elastic and can cause displacement under pressure, axial force, transverse force, or bending moment. Therefore, based on the foregoing design, when the seat moves forward and backward or the chair back (b) turns over relative to the chair seat (a), the air duct (c) can also ensure normal transport of an air conditioning airflow. In a possible implementation, reinforcing strips may be further disposed on two sides of the first corrugated pipe (t1) and the second corrugated pipe (t3), materials of the reinforcing strips are silicone materials, and metal wires are further disposed inside the reinforcing strips. As shown in FIG. 11, the first corrugated pipe (t1) is used as an example for description. FIG. 11 shows a top view and a side view of the first corrugated pipe (t1). A dashed line in FIG. 11 represents a metal wire (t102) disposed inside a reinforcing strip (t101), and the reinforcing strip (t101) is a flat long wing-shaped strip. According to the foregoing design, as shown in FIG. 12, because the reinforcing strips (t101) with the built-in metal wires (t102) are disposed on the two sides, the metal wires (t102) can provide sufficient toughness, so that even if the first corrugated pipe (t1) and the second corrugated pipe (t3) are bent by a large rotation radius, a cross-sectional area is not affected, thereby further ensuring normal transport of an air conditioning airflow. It should be noted that the first corrugated pipe (t1) shown in FIG. 11 may be manufactured through injection molding. The injection molding is also referred to as injection molding, which is a molding method of injection and molding. The injection molding has the following advantages: a fast production speed and high efficiency, automatic operations, many color varieties, simple to complex shapes, large to small sizes, an accurate product size, easy product update, and an advantage that a product can be made into a piece with a complex shape. The injection molding is applicable to the molding processing fields such as mass production and products with complex shapes. At a specific temperature, completely molten plastic materials are stirred by screw and are injected into a mold cavity with high pressure, and a molding product is obtained after cooling and curing. This method is applicable to mass production of complex parts and is one of important machining methods. The metal wire (t102) is placed at a corresponding location in an injection molding mold in advance, and then integrated injection molding is performed, to obtain the first corrugated pipe (t1) shown in FIG. 11. It should be understood that a structure and a manufacturing method of the second corrugated pipe (t3) are similar to those of the first corrugated pipe (t1), and details are not described herein again.

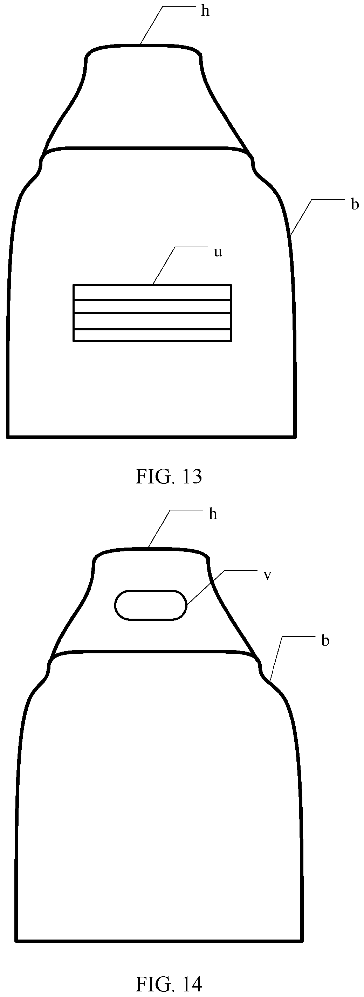

The other end of the first outlet (e) may directly discharge an air conditioning airflow from a perforated leather at the rear part of the chair back (b). The perforated leather means a small hole that can be breathed on the leather at the rear part of the chair back (b), and can also bring a beautiful texture. Alternatively, as shown in FIG. 13, the other end of the first outlet (e) may be further connected to a grille air exhaust apparatus (u) at the rear part of the chair back (b), to discharge an air conditioning airflow from the grille air exhaust apparatus (u). Alternatively, the grille air exhaust apparatus (u) may also be replaced with an electric air exhaust apparatus. A difference lies in that the grille air exhaust apparatus (u) needs to manually adjust an air exhaust direction, while the electric air exhaust apparatus can automatically adjust an air exhaust direction.

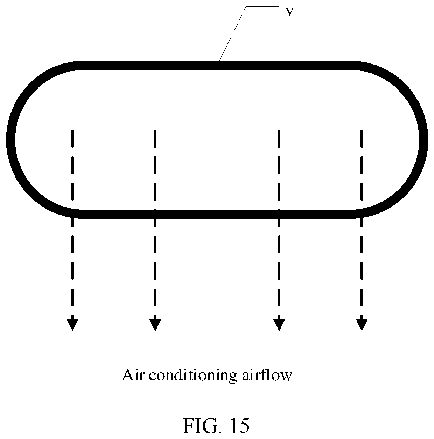

The second outlet (i) may directly discharge an air conditioning airflow from the perforated leather of the head pillow (h). Alternatively, as shown in FIG. 14, the second outlet (i) may be connected to a ring-shaped air exhaust apparatus (v) disposed at the head pillow (h), to discharge an air conditioning airflow from the ring-shaped air exhaust apparatus (v). FIG. 15 is a diagram of discharging an air conditioning airflow by the ring-shaped air exhaust apparatus (v). An air conditioning airflow discharged by the ring-shaped air exhaust apparatus (v) to a passenger has features of low wind pressure and comfortable touch.

Definitely, the ring-shaped air exhaust apparatus (v) may also be replaced with a strip-shaped air exhaust apparatus. A width of the strip-shaped air exhaust apparatus is 6 mm, and an air conditioning airflow discharged by the strip-shaped air exhaust apparatus to a passenger also has features of low wind pressure and comfortable touch.

In this case, the third outlet (j) may directly discharge an air conditioning airflow from a perforated leather at the front part of the chair back (b).

It should be noted that, in a possible implementation, the seat may also include a first air vent (e), and further include one of the second outlet (i) and the third outlet (j). Correspondingly, the first control valve (k) and the second control valve (n) do not need to be disposed inside the seat, but only one control valve needs to be disposed. For example, the control valve also includes three interfaces: an interface 1, an interface 2, and an interface 3. The interface 1 is connected to the inlet (d) of the air duct (c), the interface 2 is connected to the first air vent (e), and the interface 3 is connected to one of the second outlet (i) and the third outlet (j).

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

## Claims

1. A seat, disposed in a transportation means, wherein the seat comprises a chair seat, a chair back, and an air duct, and the air duct comprises an inlet and a first outlet; and
the inlet of the air duct is disposed at the bottom of the chair seat, and is configured to connect to an air conditioning system of the transportation means, and the first outlet of the air duct faces a rear part of the chair back.

2. The seat according to claim 1, wherein the seat further comprises a head pillow, the air duct further comprises a second outlet, and the second outlet is disposed at the head pillow.

3. The seat according to claim 1, wherein the air duct further comprises a third outlet, and the third outlet faces a front part of the chair back.

4. The seat according to claim 2, wherein the air duct further comprises a third outlet, and the third outlet faces a front part of the chair back.

5. The seat according to claim 2, wherein the air duct further comprises a first control valve disposed inside the chair back;
the first control valve comprises a first interface, a second interface, and a third interface;
the inlet of the air duct is connected to the first interface, the second interface is connected to the first outlet, and the third interface is connected to the second outlet; and
the first control valve is configured to connect the first interface to at least one of the second interface and the third interface under a preset condition.

6. The seat according to claim 3, wherein the air duct further comprises a first control valve disposed inside the chair back;
the first control valve comprises a first interface, a second interface, and a third interface;
the inlet of the air duct is connected to the first interface, the second interface is connected to the first outlet, and the third interface is connected to the third outlet; and
the first control valve is configured to connect the first interface to at least one of the second interface and the third interface under a preset condition.

7. The seat according to claim 4, wherein the air duct further comprises a first control valve disposed inside the chair back;
the first control valve comprises a first interface, a second interface, and a third interface;
the inlet of the air duct is connected to the first interface, the second interface is connected to the first outlet, and the third interface is connected to the second outlet and the third outlet; and
the first control valve is configured to connect the first interface to at least one of the second interface and the third interface under a preset condition.

8. The seat according to claim 7, wherein the air duct further comprises a second control valve;
the second control valve comprises a fourth interface, a fifth interface, and a sixth interface;
the fourth interface is connected to the third interface, and the fifth interface and the sixth interface are respectively connected to the second outlet and the third outlet; and
the second control valve is configured to connect the fourth interface to at least one of the fifth interface and the sixth interface under a preset condition.

9. The seat according to claim 5 or 6, wherein a first flow-guiding apparatus is disposed inside the first control valve, and the first flow-guiding apparatus comprises a plurality of first air baffles distributed in a fan blade manner; and
the first flow-guiding apparatus can rotate, and when the plurality of first air baffles are at a preset location, the first interface, the second interface, and the third interface are not blocked, or the first interface and the second interface are not blocked but the third interface is blocked, or the first interface and the third interface are not blocked but the second interface is blocked, or the first interface, the second interface, and the third interface are blocked.

10. The seat according to claim 8, wherein a first flow-guiding apparatus is disposed inside the first control valve, and the first flow-guiding apparatus comprises a plurality of first air baffles distributed in a fan blade manner; and
the first flow-guiding apparatus can rotate, and when the plurality of first air baffles are at a preset location, the first interface, the second interface, and the third interface are not blocked, or the first interface and the second interface are not blocked but the third interface is blocked, or the first interface and the third interface are not blocked but the second interface is blocked, or the first interface, the second interface, and the third interface are blocked.

11. The seat according to claim 10, wherein a second flow-guiding apparatus is disposed inside the second control valve, and the second flow-guiding apparatus comprises a plurality of second air baffles distributed in a fan blade manner; and
the second flow-guiding apparatus can rotate, and when the plurality of second air baffles are at a preset location, the fourth interface, the fifth interface, and the sixth interface are not blocked, or the fourth interface and the fifth interface are not blocked but the sixth interface is blocked, or the fourth interface and the sixth interface are not blocked but the fifth interface is blocked, or the fourth interface, the fifth interface, and the sixth interface are blocked.

12. The seat according to any one of claims 1 to 11, wherein the air duct comprises a first corrugated pipe and a second corrugated pipe, one end of the first corrugated pipe is the inlet of the air duct, and the second corrugated pipe is disposed near a joint between the chair seat and the chair back.

13. The seat according to claim 12, wherein two sides of the first corrugated pipe and the second corrugated pipe comprise reinforcing strips, and metal wires are disposed inside the reinforcing strips.

14. A vehicle, comprising the seat according to any one of claims 1 to 13.

15. A control valve, comprising a valve body and a flow-guiding apparatus disposed inside the valve body, wherein
the valve body is provided with a first interface, a second interface, and a third interface, and the flow-guiding apparatus comprises a plurality of air baffles distributed in a fan blade manner; and
the flow-guiding apparatus can rotate, and when the plurality of air baffles are at a preset location, the first interface, the second interface, and the third interface are not blocked, or the first interface and the second interface are not blocked but the third interface is blocked, or the first interface and the third interface are not blocked but the second interface is blocked, or the first interface, the second interface, and the third interface are blocked.

16. A corrugated pipe, comprising a pipe body and reinforcing strips disposed on two sides of the pipe body, wherein metal wires are disposed inside the reinforcing strips.
